# EUROPEAN PATENT APPLICATION

(11) **EP 4 826 489 A1**
(43) Date of publication of application: **21.10.2026**
(21) Application number: 26169979.7
(22) Date of filing: 31.03.2026
(51) Int. Cl.: G06F 1/16, H04M 1/02

(54) **ELECTRONIC DEVICE AND FOLDABLE ELECTRONIC DEVICE**

(30) Priority: 15.04.2025 KR 20250048705
(71) Applicant: Samsung Display Co., Ltd, Yongin-si, Gyeonggi-Do (KR)
(72) Inventor: Park, Jongdeok, Yongin-si, Gyeonggi-Do (KR); Kim, Moon Kon, Yongin-si, Gyeonggi-Do (KR); Kim, Heechang, Yongin-si, Gyeonggi-Do (KR); Mun, Eunjoong, Yongin-si, Gyeonggi-Do (KR); Park, Minhee, Yongin-si, Gyeonggi-Do (KR); Bae, Jin-Hee, Yongin-si, Gyeonggi-Do (KR); Onoue, Shinya, Yongin-si, Gyeonggi-Do (KR)
(74) Representative: Gulde & Partner

(57) **Abstract**

An electronic device includes a display panel including a first portion including a first upper surface and a plurality of first side surfaces connected to the first upper surface, a bending portion, and a second portion, an upper member on the first upper surface and including a plurality of second side surfaces, a lower member under the first portion of the display panel, and an edge member covering the plurality of second side surfaces of the upper member, the plurality of first side surfaces, and a portion of the first upper surface that is adjacent to the bending portion.

## Description

### BACKGROUND

The present disclosure relates to an electronic device and a foldable electronic device.

A flexible electronic device may include a curved display panel that is fixed in a state having a specific curvature, a foldable display panel that may be bent beyond a specific radius of curvature or bent around a folding axis, or a rollable display panel that may be rolled to a specific radius of curvature. At least some of the components constituting the electronic device may have a flexible property to be bent, folded, or rolled.

Information disclosed in this Background section has already been known to or derived by the inventors before or during the process of achieving the embodiments of the present application, or is technical information acquired in the process of achieving the embodiments. Therefore, it may contain information that does not form the prior art that is already known to the public.

### SUMMARY

An electronic device according to the independent claim is provided.

One or more example embodiments provide an electronic device that may have improved product reliability. In particular, example embodiments of an electronic device may provide protection from external impact. Further, example embodiments of an electronic device may provide protection from external substances. Additionally, example embodiments of an electronic device may provide an improved strength and durability, in particular of a bending portion.

Additional aspects will be set forth in part in the description which follows and, in part, will be apparent from the description, or may be learned by practice of the presented embodiments.

According to an aspect of an example embodiment, an electronic device may include a display panel including a first portion including a first upper surface and a plurality of first side surfaces connected to the first upper surface, a bending portion, and a second portion, an upper member on the first upper surface and including a plurality of second side surfaces, a lower member under the first portion of the display panel, and an edge member covering the plurality of second side surfaces of the upper member, the plurality of first side surfaces, and a portion of the first upper surface that is adjacent to the bending portion.

The edge member may include a first edge portion contacting the plurality of first side surfaces and a second edge portion contacting the portion of the first upper surface, and a shape of a first outer surface of the first edge portion may be different from a shape of a second outer surface of the second edge portion.

The plurality of second side surfaces may include a plurality of (2-1)-th side surfaces contacting the first edge portion and a (2-2)-th side surface contacting the second edge portion.

The shape of the first outer surface may be convex protruding from the plurality of first side surfaces and the plurality of (2-1)-th side surfaces, and the shape of the second outer surface may be inclined with respect to the (2-2)-th side surface.

The electronic device may further include a bending protecting member on the bending portion of the display panel, where the second edge portion may cover a portion of the bending protecting member.

The electronic device may further include a reinforcing member facing the bending portion of the display panel.

The electronic device may further include a first film between the display panel and the lower member, and under the first portion of the display panel and a second film under the second portion of the display panel, where at least a portion of the bending portion between the first film and the second film contacts the reinforcing member.

The upper member may include a second upper surface connected to the plurality of second side surfaces, and the edge member covers a portion of the second upper surface.

The upper member may include a protective film, and a window between the protective film and the first portion of the display panel, and each of the plurality of second side surfaces may include a first side surface portion defined by the protective film and a second side surface portion defined by the window.

For each of the plurality of second side surfaces, the first side surface portion may be vertically aligned with the second side surface portion.

Among the plurality of second side surfaces, at least one second side surface portion may laterally protrude less than at least one first side surface portion such that a concave groove is defined in the respective second side surface, and the edge member may be in the concave groove.

The edge member may contact side walls of the lower member.

The first portion may be adjacent to the bending portion in a first direction, and the bending portion may be bent with respect to an axis extending in a second direction intersecting the first direction, and the first portion may include a first non-folding area, a folding area, and a second non-folding area sequentially defined along the first direction.

The electronic device may further include a processor configured to control an operation of the display panel, a memory configured to store data information for an operation of the processor or the display panel, and a power module configured to supply electric power for operations of the display panel and the processor.

The window of the upper member may be protected from external impact by the edge member, and side surfaces of the display panel may be protected from external foreign substances by the edge member. Because the bending portion of the display panel is supported by the reinforcing member, the strength and durability of the bending portion may be improved. As a result, the durability and reliability of the electronic device may be improved.

According to an aspect of an example embodiment, a foldable electronic device may include a display panel including a first portion including a first non-folding area, a folding area, and a second non-folding area sequentially defined along a first direction, a bending portion, and a second portion, an upper member on the first portion of the display panel, a lower member under the first portion of the display panel, and an edge member covering a plurality of side surfaces of the upper member, and a portion of an upper surface of the first portion that is adjacent to the bending portion.

The edge member may include a first edge portion extending in the first direction, and a second edge portion extending in a second direction intersecting the first direction, the second edge portion may contact the upper surface of the first portion, a shape of a first outer surface of the first edge portion may be different from a shape of a second outer surface of the second edge portion.

The shape of the first outer surface may be convex protruding from the display panel and side surfaces of the upper member, and the shape of the second outer surface may be inclined with respect to the display panel and the side surfaces of the upper member.

The foldable electronic device may further include a reinforcing member on the bending portion of the display panel, where, when the bending portion of the display panel is bent, the second portion of the display panel is under the lower member and the reinforcing member is between a side surface of the lower member and the bending portion.

According to an aspect of an example embodiment, an electronic device may include a display panel including a first portion, a bending portion, and a second portion, an upper member on the first portion of the display panel, a lower member under the first portion of the display panel, and an edge member covering a plurality of side surfaces of the upper member, where the edge member may include a first edge portion extending in a first direction and a second edge portion extending in a second direction intersecting the first direction and a shape of a first outer surface of the first edge portion may be different from a shape of a second outer surface of the second edge portion.

The second edge portion may overlap the first portion and the bending portion of the display panel, the shape of the first outer surface may be convex protruding from the display panel and side surfaces of the upper member in the first direction and the shape of the second outer surface may be inclined with respect to the display panel and the side surfaces of the upper member.

### BRIEF DESCRIPTION OF DRAWINGS

The above and other aspects, features, and advantages of certain example embodiments of the present disclosure will be more apparent from the following description taken in conjunction with the accompanying drawings, in which:
FIG. 1 is a block diagram of an electronic device according to an embodiment;
FIG. 2 illustrates schematic views of an electronic device according to various embodiments;
FIG. 3A is a perspective view illustrating an unfolded state of an electronic device according to an embodiment of the present disclosure;
FIG. 3B is a perspective view illustrating an in-folding process of an electronic device according to an embodiment of the present disclosure illustrated in FIG. 3A;
FIG. 3C is a perspective view illustrating an out-folding process of an electronic device according to an embodiment of the present disclosure illustrated in FIG. 3A;
FIG. 4A is a perspective view illustrating an unfolded state of an electronic device according to an embodiment of the present disclosure;
FIG. 4B is a perspective view illustrating an in-folding process of an electronic device according to an embodiment of the present disclosure illustrated in FIG. 4A;
FIG. 4C is a perspective view illustrating an out-folding process of an electronic device according to an embodiment of the present disclosure illustrated in FIG. 4A;
FIG. 5 is an exploded perspective view of an electronic device according to an embodiment of the present disclosure;
FIG. 6 is a cross-sectional view of a portion of an electronic device according to an embodiment of the present disclosure;
FIG. 7 is a perspective view of a display panel according to an embodiment of the present disclosure;
FIG. 8 is a cross-sectional view of a portion of an electronic device according to an embodiment of the present disclosure;
FIG. 9 is a cross-sectional view of a portion of an electronic device according to an embodiment of the present disclosure;
FIG. 10 is a cross-sectional view of a portion of an electronic device according to an embodiment of the present disclosure;
FIG. 11 is a cross-sectional view of an electronic device according to an embodiment of the present disclosure;
FIG. 12 is a cross-sectional view of an electronic device according to an embodiment of the present disclosure;
FIG. 13 is a cross-sectional view of an electronic device according to an embodiment of the present disclosure;
FIG. 14 is a cross-sectional view of an electronic device according to an embodiment of the present disclosure;
FIG. 15 is a flowchart of a method for manufacturing an electronic device according to an embodiment of the present disclosure;
FIG. 16 is a flowchart of a method for manufacturing an electronic device according to an embodiment of the present disclosure;
FIG. 17 is a diagram illustrating one operation of a method for manufacturing an electronic device according to an embodiment of the present disclosure;
FIGS. 18A and 18B are views illustrating one operation of a method for manufacturing an electronic device according to an embodiment of the present disclosure;
FIGS. 19A and 19B are views illustrating one operation of a method for manufacturing an electronic device according to an embodiment of the present disclosure; and
FIG. 20 is a cross-sectional view of a portion of an electronic device according to an embodiment of the present disclosure.

### DETAILED DESCRIPTION

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

It will be understood that when an element or layer is referred to as being "over," "above," "on," "below," "under," "beneath," "connected to" or "coupled to" another element or layer, it can be directly over, above, on, below, under, beneath, connected or coupled to the other element or layer or intervening elements or layers may be present. In contrast, when an element is referred to as being "directly over," "directly above," "directly on," "directly below," "directly under," "directly beneath," "directly connected to" or "directly coupled to" another element or layer, there are no intervening elements or layers present.

The same reference numerals refer to the same components. Furthermore, in drawings, the thickness, ratio, and dimension of components are exaggerated for effectiveness of description of technical contents. The term "and/or" includes one or more combinations in each of which associated elements are defined.

Although the terms "first", "second", etc. may be used to describe various components, the components should not be construed as being limited by the terms. The terms are only used to distinguish one component from another component. For example, a first component may be referred to as a second component, and similarly, the second component may be referred to as the first component. The articles "a," "an," and "the" are singular in that they have a single referent, but the use of the singular form in the specification should not preclude the presence of more than one referent.

Also, the terms "under", "below", "on", "above", and the like are used to describe the correlation of components illustrated in drawings. The terms are relative concepts, and are described with respect to directions indicated in the drawings.

It will be understood that the terms "include", "comprise", "have", etc. specify the presence of features, numbers, steps, operations, elements, or components, described in the specification, or a combination thereof, not precluding the presence or additional possibility of one or more other features, numbers, steps, operations, elements, or components or a combination thereof.

Operations of a method may be performed in an appropriate order unless explicitly described in terms of order. In addition, the use of all illustrative terms (e.g., etc.) is merely for describing technical ideas in detail, and the scope is not limited by these examples or illustrative terms unless limited by the claims.

Terms "part" and "unit" mean a software component or hardware component that performs a specific function. For example, the hardware component may include a field-programmable gate array (FPGA) or an application-specific integrated circuit (ASIC). The software component may refer to executable codes and/or data used by the executable codes in an addressable storage medium. Accordingly, the software components may be, for example, object-oriented software components, class components, and task components, and may include processes, functions, attributes, procedures, subroutines, program code segments, drivers, firmware, microcodes, circuits, data, databases, data structures, tables, arrays, or variables.

Unless otherwise defined, all terms (including technical terms and scientific terms) used in the specification have the same meaning as commonly understood by one skilled in the art to which the present disclosure belongs. Furthermore, terms such as terms defined in the dictionaries commonly used should be interpreted as having a meaning consistent with the meaning in the context of the related technology, and should not be interpreted in ideal or overly formal meanings unless explicitly defined herein.

Hereinafter, embodiments of the present disclosure will be described with reference to accompanying drawings.

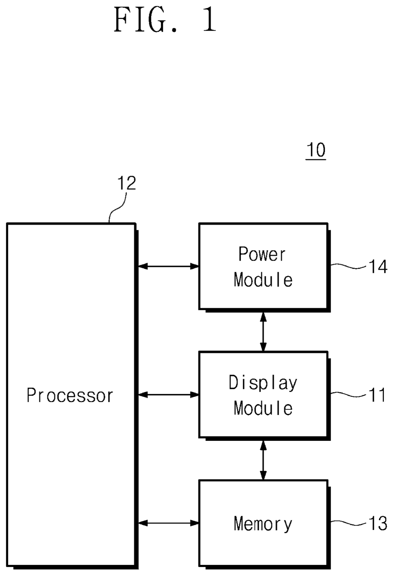

FIG. 1 is a block diagram of an electronic device 10 according to an embodiment.

Referring to FIG. 1, the electronic device 10 according to an embodiment may include a display module 11, a processor 12, a memory 13, and a power module 14.

The display module 11 may display an image. The image may include a still image as well as a moving image. The processor 12 may include at least one of a central processing unit (CPU), an application processor (AP), a graphic processing unit (GPU), a communication processor (CP), an image signal processor (ISP), and a controller. The processor 12 may be configured to control an operation of the display module 11 (e.g., a display panel).

Data information that is necessary for an operation of the processor 12 or the display module 11 (e.g., a display panel) may be stored in the memory 13. When the processor 12 executes an application stored in the memory 13, an image data signal and/or an input control signal may be transmitted to the display module 11, and the display module 11 may process the provided signal and output image information through a display screen.

The power module 14 may include a power supply module, such as a power adapter or a battery device, and a power conversion module that converts electric power supplied by the power supply module to generate electric power that is required for an operation of the electronic device 10. The power module 14 may be configured to supply electric power for operations of the display panel and the processor 12.

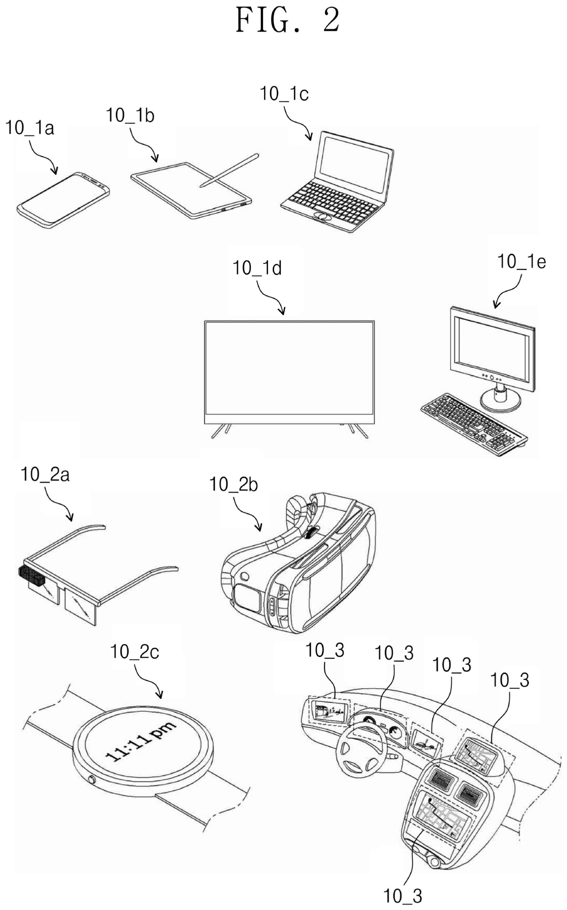

FIG. 2 illustrates schematic views of an electronic device according to various embodiments.

Referring to FIG. 2, various electronic device, to which the displays according to embodiments are applied, may include not only an electronic device for displaying an image, such as a smartphone 10_1a, a tablet PC 10_1b, a laptop computer 10_1c, a TV 10_1d, and a monitor 10_1e for a desk, and but also a wearable electronic device including a display module, such as smart glasses 10_2a, a head-mounted display 10_2b, and a smart watch 10_2c, and an electronic device 10_3 for a vehicle including a display module, such as a center information display disposed in an instrument panel for a vehicle, a center fascia, and a dash board, and a room mirror display.

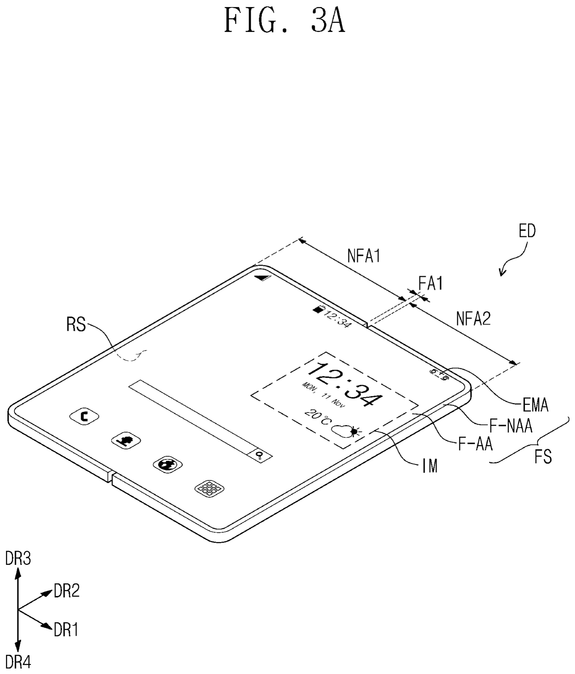

Hereinafter, electronic devices according to various embodiments are described in FIGS. 3A to 5.

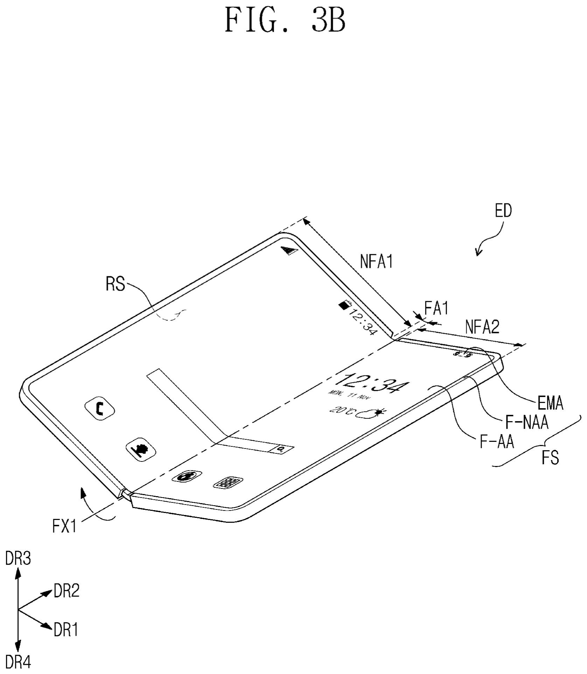

FIG. 3A is a perspective view illustrating an unfolded state of an electronic device ED according to an embodiment of the present disclosure. FIG. 3B is a perspective view illustrating an in-folding process of an electronic device ED according to an embodiment of the present disclosure illustrated in FIG. 3A.

Referring to FIGS. 3A and 3B, the electronic device ED may be a foldable electronic device ED.

The electronic device ED may include a first display surface FS that is defined by a first direction DR1 and a second direction DR2 that intersects the first direction DR1. The first display surface FS may include an active area F-AA and a peripheral area F-NAA. The active area F-AA may include an electronic module area EMA.

The electronic device ED may provide an image IM to a user through the first display surface FS. The electronic device ED of an embodiment may display the image **IM on** the first display surface FS that is parallel to each of the first direction DR1 and the second direction DR2 toward a third direction DR3. As described herein, in some examples, a front surface (or upper surface) and a rear surface (or lower surface) of each component are defined with respect to a direction, in which the image IM is displayed on the first display surface FS. The front surface and the rear surface may be opposite to each other in the third direction DR3, and a normal direction of each of the front surface and the rear surface may be parallel to the third direction DR3.

The active area F-AA of the electronic device ED may be an area that is activated in response to an electrical signal. The electronic device ED according to an embodiment may display an image IM through the active area F-AA. Furthermore, various forms of external inputs may be sensed in the active area F-AA. A peripheral area F-NAA is adjacent to the active area F-AA. The peripheral area F-NAA may have a specific color. The peripheral area F-NAA may surround the active area F-AA. Accordingly, a shape of the active area F-AA may be substantially defined by the peripheral area F-NAA. However, embodiments are not limited thereto, and the peripheral area F-NAA may be disposed adjacent to only one side of the active area F-AA or may be omitted. The electronic device ED according to an embodiment of the present disclosure may include active areas of various shapes, and is not limited to an embodiment.

Various electronic modules may be disposed in the electronic module area EMA. For example, the electronic module may include at least one of a camera, a speaker, a light detection sensor, and a heat detection sensor. The electronic module area EMA may sense an external subject received through the first display surface FS or provide an audio signal, such as a voice, to the outside through the first display surface FS. The electronic module may include a plurality of components, and the present disclosure is not limited to any one embodiment.

The electronic module area EMA may be surrounded by the active area F-AA and the peripheral area F-NAA. However, embodiments are not limited thereto, and the electronic module area EMA may be disposed in the active area F-AA.

The electronic device ED according to an embodiment of the present disclosure may further include a second display surface RS. The second display surface RS may be defined as a surface that faces away from at least a portion of the first display surface FS. That is, the second display surface RS may be defined as a portion of a rear surface of the electronic device ED. The second display surface RS may be defined as a surface that is exposed to the outside when the electronic device ED is in-folded.

The electronic device ED may sense an external input applied from the outside. The external input may include various types of inputs that are provided from the outside of the electronic device ED. For example, as well as a contact by a portion of a body such as a user's hand, the external input may include an external input (e.g., hovering) applied when the user's hand approaches the electronic device ED or is adjacent to the electronic device ED within a predetermined distance. In addition, the external input may have various types, such as force, pressure, temperature, light, and the like.

The electronic device ED may include a folding area FA1 and non-folding areas NFA1 and NFA2. In an embodiment, the non-folding areas NFA1 and NFA2 may be disposed adjacent to the folding area FA1 with the folding area FA1 therebetween. The electronic device ED of an embodiment may include a first non-folding area NFA1 and a second non-folding area NFA2 that are spaced apart from each other in the first direction DR1 with the folding area FA1 interposed therebetween.

Referring to FIGS. 3A and 3B, the electronic device ED may be configured to be folded and unfolded with respect to a first folding axis FX1. The first folding axis FX1 is an imaginary axis that extends in the second direction DR2, and the first folding axis FX1 may be parallel to one side (e.g., a long side) of the electronic device ED.

The electronic device ED may be folded with respect to the first folding axis FX1 to be transformed into an in-folding state, in which one area of the first display surface FS, which overlaps the first non-folding area NFA1, and another area of the first display surface FS that overlaps the second non-folding area NFA2 face each other.

When the electronic device ED according to an embodiment is in an in-folding state, a second display surface RS may be visibly recognized by a user. The second display surface RS may further include an electronic module area, in which electronic modules including various components are disposed, and the present disclosure is not limited to any one embodiment.

FIG. 3A and the following drawings illustrate first to fourth directions DR1 to DR4, and directions indicated by the first to fourth directions DR1, DR2, DR3, and DR4 described in this specification may be relative concepts and may be converted into other directions. Besides, the directions indicated by the first to fourth directions DR1, DR2, DR3, and DR4 may be described as first to fourth direction axes DR1, DR2, DR3, and DR4, and the same reference numerals may be used. The first direction DR1 and the second direction DR2 may be perpendicular to each other, and each of the third direction DR3 and the fourth direction DR4 may be a normal direction to a plane defined by the first direction DR1 and the second direction DR2. As used herein, "on a plane" may be defined as a state, in which it is viewed from the third direction DR3. Directions that are indicated by the first to fourth directions DR1, DR2, DR3, and DR4 may be converted into other directions as relative concepts.

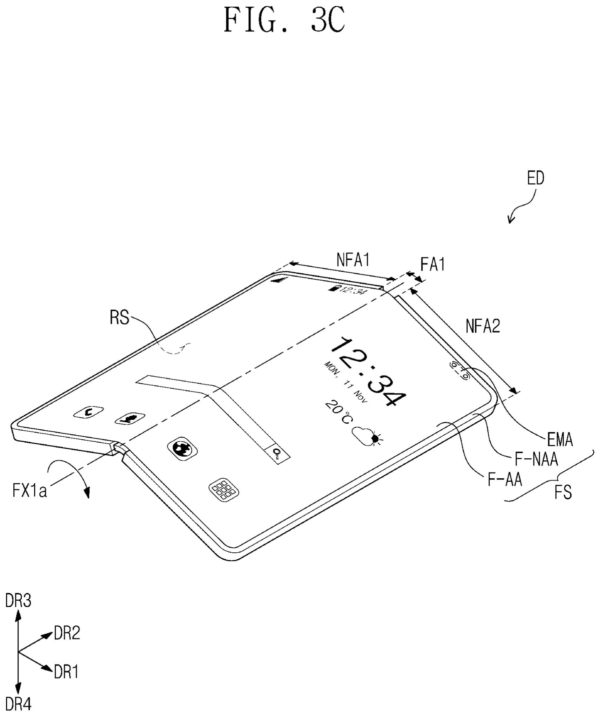

FIG. 3C is a perspective view illustrating an out-folding process of an electronic device ED according to an embodiment of the present disclosure illustrated in FIG. 3A.

Referring to FIGS. 3A and 3C, the electronic device ED may be folded with respect to the first folding axis FX1a to be transformed into an out-folding state, in which one area of the second display surface RS, which overlaps the first non-folding area NFA1, and another area of the second display surface RS that overlaps the second non-folding area NFA2 face each other.

Referring to FIGS. 3A, 3B, and 3C, the electronic device ED may be configured to be transformed into an in-folding state, in which an area of the first display surface FS, which overlaps the first non-folding area NFA1, and another area of the first display surface FS that overlaps the second non-folding area NFA2 face each other, or to be transformed into an out-folding state, in which an area of the second display surface RS, which overlaps the first non-folding area NFA1, and another area that overlaps the second non-folding area NFA2 face each other.

That is, according to an embodiment of the present disclosure, the electronic device ED may be configured to allow only in-folding, to allow only out-folding, or to allow both in-folding and out-folding.

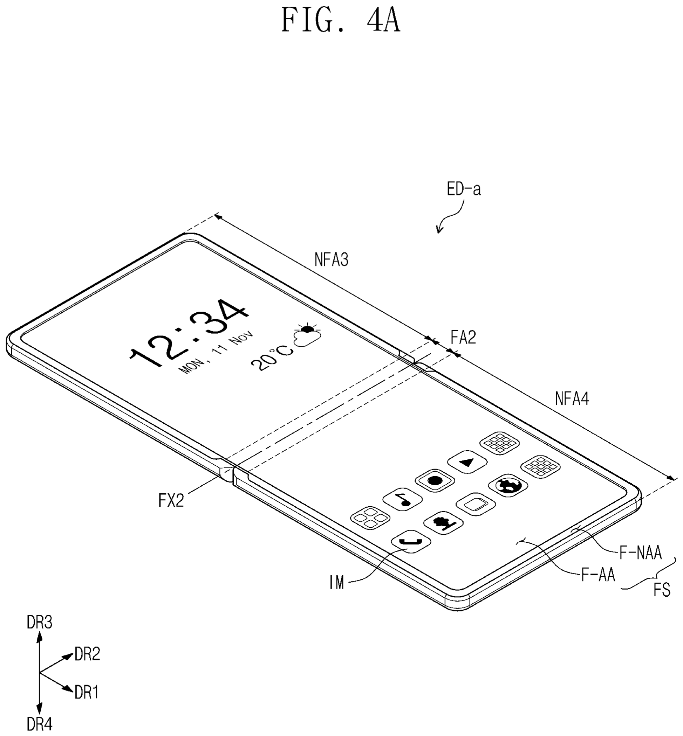

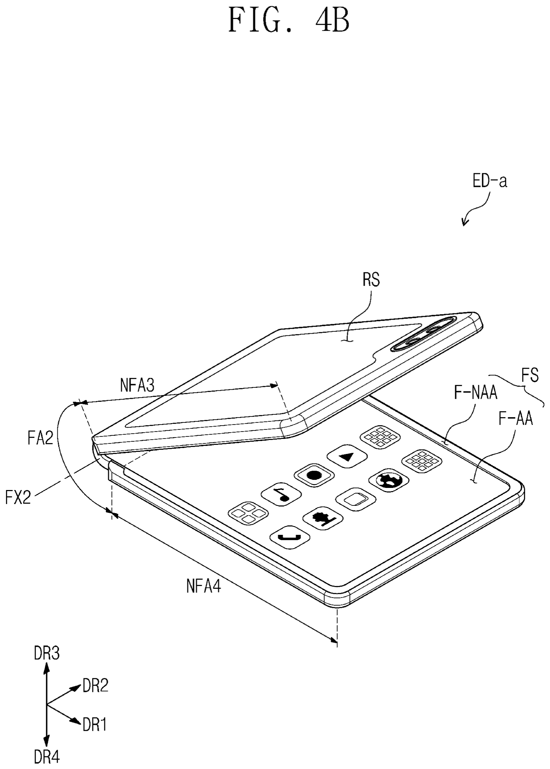

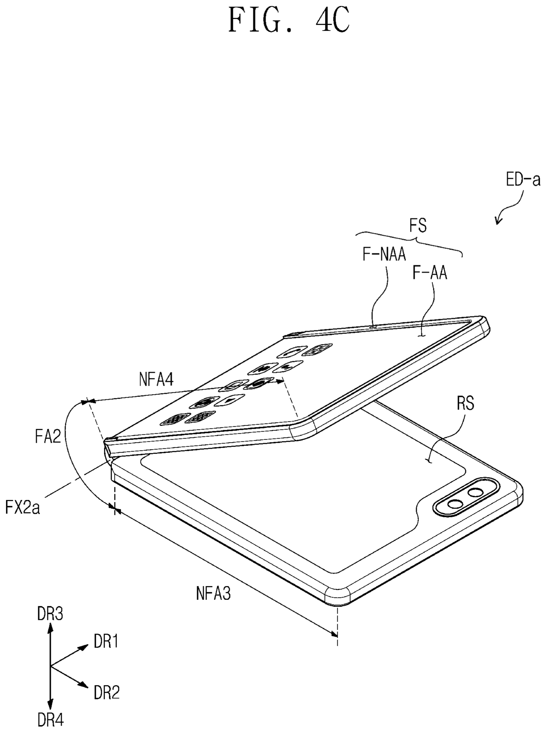

FIG. 4A is a perspective view illustrating an unfolded state of an electronic device ED-a according to an embodiment of the present disclosure. FIG. 4B is a perspective view illustrating an in-folding process of an electronic device ED-a according to an embodiment of the present disclosure illustrated in FIG. 4A. FIG. 4C is a perspective view illustrating an out-folding process of an electronic device ED-a according to an embodiment of the present disclosure illustrated in FIG. 4A.

Referring to FIGS. 4A, 4B, and 4C, the electronic device ED-a may be folded with respect to a second folding axis FX2 or FX2a that is parallel to the second direction DR2. In FIGS. 4B and 4C, it is illustrated that an extension direction of the second folding axes FX2 and FX2a is parallel to an extension direction of a short side of the electronic device ED-a. However, embodiments are not limited thereto.

The electronic device ED-a may include at least one folding area FA2 and non-folding areas NFA3 and NFA4 that are adjacent to the folding area FA2. The non-folding areas NFA3 and NFA4 may be spaced apart from each other with the folding area FA2 interposed therebetween.

The folding area FA2 has a specific curvature and a specific radius of curvature. In an embodiment, the first non-folding area NFA3 and the second non-folding area NFA4 face each other, and the electronic device ED-a may be in-folded so that the first display surface FS is not exposed to the outside. Furthermore, referring to FIG. 4C, in an embodiment, the electronic device ED-a may be out-folded so that the first display surface FS is exposed to the outside.

The electronic device ED-a according to an embodiment may include a second display surface RS, and the second display surface RS may be defined as a surface that faces at least a portion of the first display surface FS. An image or video may be displayed on at least a portion of the second display surface RS.

In FIGS. 3A to 4C above, examples, in which one folding area is defined in each of the electronic devices ED and ED-a, embodiments are not limited thereto. For example, each of the electronic devices ED and ED-a may be a multi-foldable electronic device including a plurality of folding areas.

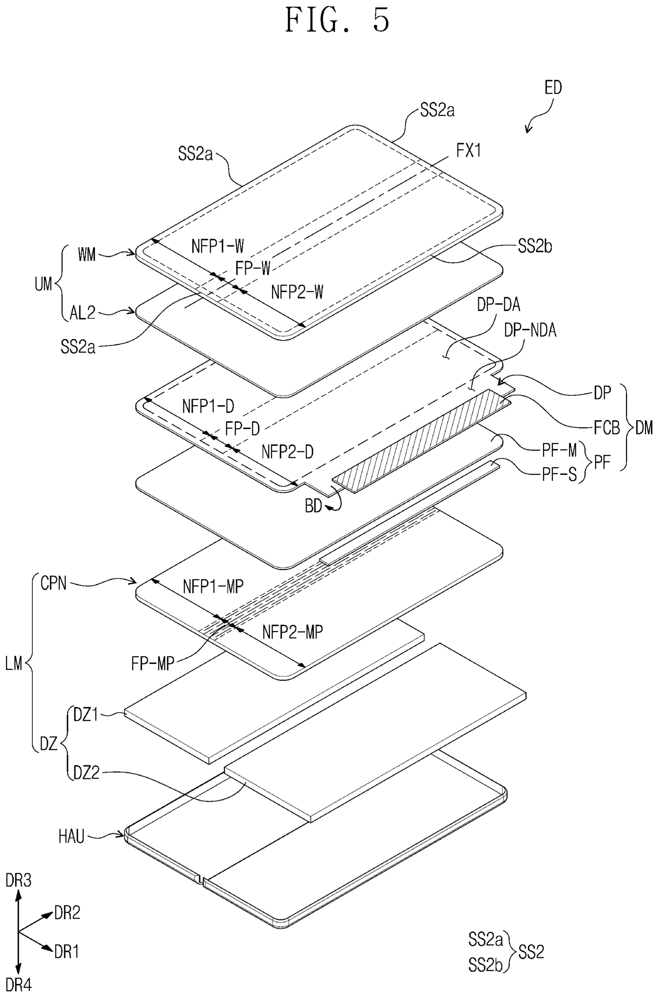

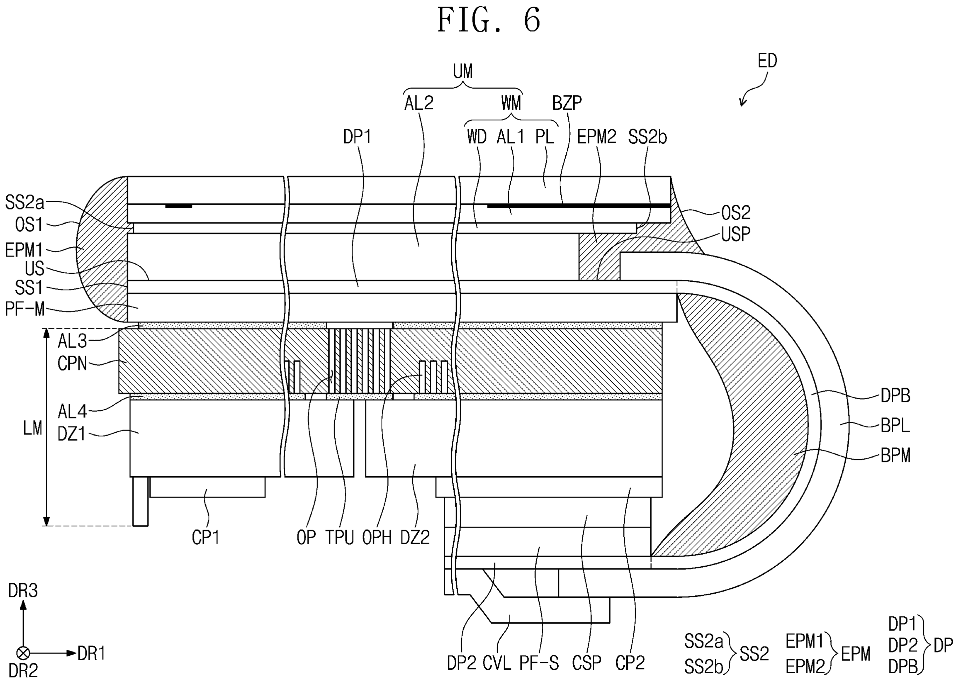

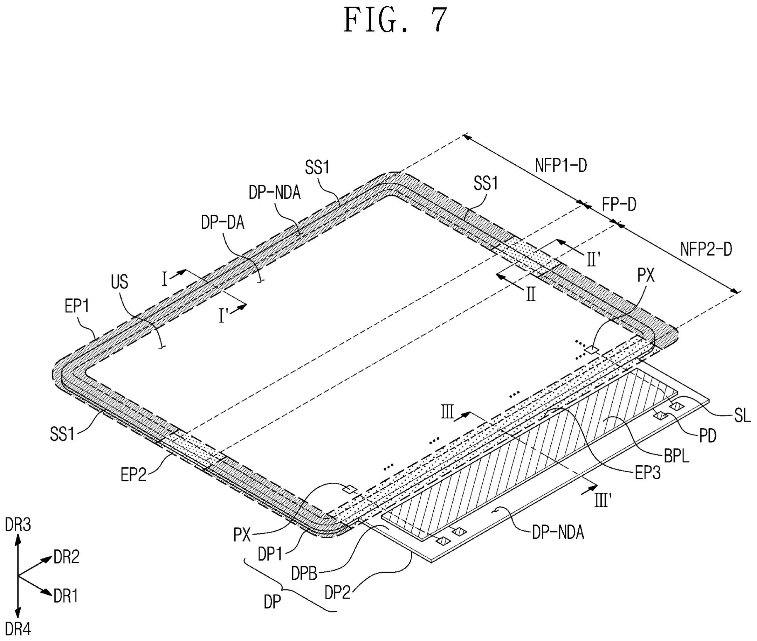

FIG. 5 is an exploded perspective view of an electronic device ED according to an embodiment of the present disclosure. FIG.6 is a cross-sectional view of a portion of an electronic device ED according to an embodiment of the present disclosure. FIG. 7 is a perspective view of a display panel DP according to an embodiment of the present disclosure.

Referring to FIGS. 5, 6, and 7, the electronic device ED may include a display module DM, an upper member UM located on the display module DM, a lower member LM located under the display module DM, and a housing HAU.

The display module DM may include a display panel DP, a circuit board FCB, and a film member PF.

The display panel DP may include a display layer and a sensor layer. The display layer may be a configuration that actually generates an image. The display layer may be a light emitting display layer, and for example, the display layer may be an organic light emitting display layer, an inorganic light emitting display layer, an organic-inorganic light emitting display layer, a quantum dot display layer, a micro-LED display layer, or a nano-LED display layer. The sensor layer may sense an external input that is applied from the outside. The sensor layer may be an integrated sensor that is formed continuously during the manufacturing process of the display layer, or may be an external sensor that is attached to the display layer. The sensor layer may be referred to as a sensor, an input sensing layer, an input sensing panel, or an electronic device for sensing input coordinates.

A display area DP-DA and a non-display area DP-NDA may be defined in the display panel DP. The display area DP-DA may be defined as an area that displays an image provided by the display module DM. Furthermore, the display area DP-DA may function as a sensing area that senses an external input. The non-display area DP-NDA is adjacent to the display area DP-DA. For example, the non-display area DP-NDA may surround the display area DP-DA at an outskirt of the display area DP-DA. However, this is merely exemplary, and the non-display area DP-NDA may be defined in various shapes, and the present disclosure is not limited to any one embodiment.

According to an embodiment of the present disclosure, the display area DP-DA of the display module DM may correspond to at least a portion of an active area F-AA (see FIG. 3A). A plurality of pixel areas PX may be positioned in the display area DP-DA. Each of the pixel areas PX may be controlled to emit light for image display. Each of the pixel areas PX may be referred to as an emission area that is operated by an electrical signal to emit light.

The display panel DP may include a first portion DP1, a bending portion DPB, and a second portion DP2. The first portion DP1 of the display panel DP may overlap the entirety of the display area DP-DA and a portion of the non-display area DP-NDA, and the bending portion DPB and the second portion DP2 may overlap the remaining portion of the non-display area DP-NDA.

The first portion DP1 and the bending portion DPB may be adjacent to each other in the first direction DR1, and the bending portion DPB may be bent (e.g., in direction BD) with respect to an axis that extends in the second direction DR2 that crosses (or intersects) the first direction DR1, for example, an imaginary bending axis, and may be received in the housing HAU. The bending portion DPB may be bent in the fourth direction DR4 with respect to the bending axis. Furthermore, as the bending portion DPB is bent, the second portion DP2 is disposed under the first portion DP1, and the second portion DP2 may overlap at least a portion of the display area DP-DA. As the bending portion DPB is bent (e.g., in direction BD), an extent of the peripheral area F-NAA (see FIG. 3A) visually recognized on the first display surface FS (see FIG. 3A) of the electronic device ED may be reduced.

Signal wiring lines SL that are electrically connected to pixel areas PX and pads PD that are electrically connected to the signal wiring lines SL, and the like may be disposed in the bending portion DPB and the second portion DP2. Furthermore, circuit wiring lines, driving chips, and the like that control the operation of the display modules DM may be disposed in the bending portion DPB and the second portion DP2.

The display panel DP may be connected to the circuit board FCB, and the like in the second portion DP2. The circuit board FCB may be electrically connected to pads PD, and the like disposed in the second portion DP2. After the circuit board FCB is connected to the second portion DP2, the bending portion DPB may be bent, and the circuit board FCB may be disposed to overlap the first portion DP1 of the display panel DP.

The first portion DP1 of a display panel DP may include a first non-folding area NFP1-D, a folding area FP-D, and a second non-folding area NFP2-D that are sequentially defined along the first direction DR1. The folding area FP-D may be a portion that is folded or bent with respect to a first folding axis FX1 (see FIG. 3B). The first non-folding area NFP1-D and the second non-folding area NFP2-D may be spaced apart from each other with the folding area FP-D interposed therebetween. The folding area FP-D may be a portion corresponding to the folding area FA1 (see FIG. 3A), and the first and second non-folding areas NFP1-D and NFP2-D may be a portion corresponding to the non-folding area NFA1 and NFA2 (see FIG. 3A).

The film member PF may be a layer that is disposed on a lower side of the display panel DP to protect a rear surface of the display panel DP. For example, the film member PF may include a polyimide film or a polyethylene terephthalate film. However, this is exemplary, and the material of the film member PF is not limited thereto.

The film member PF may include a first film PF-M that primarily covers (or is covered by depending on device orientation) the first portion DP1 of the display panel DP and a second film PF-S that is spaced apart from the first film PF-M and primarily covers (or is covered by depending on device orientation) the second portion DP2 of the display panel DP. The first film PF-M and the second film PF-S may be spaced apart from each other with the bending portion DPB of the display panel DP interposed therebetween and may be attached to a rear surface of the display panel DP. The first film PF-M may be between the display panel DP and the lower member LM, and under the first portion DP1of the display panel DP. The second film PF-S may be under the second portion DP2 of the display panel DP.

In a bent state of the bending portion DPB, the first film PF-M and the second film PF-S may overlap each other in the third direction DR3. A lower member LM may be disposed between the first film PF-M and the second film PF-S that overlap each other in the third direction DR3.

According to an embodiment of the present disclosure, the display module DM may further include a bending protecting member BPL. The bending protecting member BPL may have modulus characteristics that are not damaged by cracks or the like even after bending. The bending protecting member BPL may be on the bending portion DPB. The bending protecting member BPL may be formed by providing an organic resin and curing the provided resin. The bending protecting member BPL may cover the bending portion DPB. Although FIG. 6 illustrates an example in which the bending protecting member BPL covers the entire bending portion DPB, at least a portion of the first portion DP1, and at least a portion of the second portion DP2, embodiments are not limited thereto.

According to an embodiment of the present disclosure, the display module DM may further include a reinforcing member BPM. The reinforcing member BPM may face the bending portion DPB. The reinforcing member BPM may be on the bending portion DPB. The reinforcing member BPM may contact at least a portion of a bending portion DPB, which is exposed between the first film PF-M and the second film PF-S on a lower surface of the display panel DP. That is, the reinforcing member BPM may contact the bending portion DPB that is between the first film PF-M and the second film PF-S. The reinforcing member BPM may cover the bending portion DPB. For example, the bending portion DPB of the display panel DP may be disposed between the reinforcing member BPM and the bending protecting member BPL.

The reinforcing member BPM may have a form that fills at least a portion of a space defined between the display panel DP and the lower member LM while the bending portion DPB is bent. The reinforcing member BPM may fill a portion of an inner bending area defined by a side surface of the lower member LM and the bending portion DPB of the display panel DP. That is, the reinforcing member BPM faces the lower member LM and may be disposed between the side surface of the lower member LM and the bending portion DPB. Because the bending portion DPB is supported by the reinforcing member BPM, the strength and durability of the bending portion DPB may be improved. As a result, the durability and reliability of the electronic device ED may be improved.

The upper member UM may be disposed on the first portion DP1 of the display panel DP. The upper member UM may include a window member WM and an upper adhesive layer AL2. The window member WM may include a protective film PL, an adhesive layer AL1 that is disposed under the protective film PL, a bezel pattern BZP that is disposed between the protective film PL and the adhesive layer AL1, and a window WD that is disposed under the adhesive layer AL1. The window WD may be between the protective film PL and the first portion DP1 of the display panel DP. The upper adhesive layer AL2 may be an optically transparent adhesive film or an optically transparent adhesive resin layer. However, the components that constitute the upper member UM are not limited to the components listed above. For example, the upper member UM may further include a polarizing film to reduce reflectivity, or at least some of the components listed above may be omitted. For example, the upper adhesive layer AL2 may be omitted.

The window member WM may include a folding portion FP-W and first and second non-folding portions NFP1-W and NFP2-W. The first non-folding portion NFP1-W and the second non-folding portion NFP2-W of the window member WM may be spaced apart from each other in the first direction DR1 with the folding portion FP-W interposed therebetween. The folding portion FP-W may be a portion corresponding to the folding area FA1 (see FIG. 3A), and the non-folding portions NFP1-W and NFP2-W may be portions corresponding to the non-folding areas NFA1 and NFA2 (see FIG. 3A).

The window WD may be a glass substrate. For example, the window WD may be a tempered glass substrate. For example, the window WD may be an ultra-thin tempered glass substrate. A protective film PL may be disposed on an upper side of the window WD to protect the window WD from the external environment.

The bezel pattern BZP may be provided on a lower surface of the protective film PL, and the bezel pattern BZP may be covered by an adhesive layer AL1. The bezel pattern BZP may define a peripheral area F-NAA (see FIG. 3A). In an embodiment of the present disclosure, the bezel pattern BZP may be omitted.

The lower member LM may be located under the first portion DP1 of the display panel DP. The second portion DP2 of the display panel DP may be located under the lower member LM.

In an embodiment of the present disclosure, the lower member LM may include a support plate CPN, digitizers DZ1 and DZ2, a cover member TPU, lower functional members CP1 and CP2, a lower spacer CSP, and adhesive layers AL3 and AL4. However, the components that constitute the lower member LM are not limited to the components listed above. For example, at least some of the components listed above may be omitted. For example, the digitizers DZ1 and DZ2 may be omitted. Alternatively, a barrier layer may be further disposed between the first portion DP1 of the display panel DP and the support plate CPN.

The support plate CPN may include a folding support portion FP-MP and non-folding support portions NFP1-MP and NFP2-MP. The first non-folding support portion NFP1-MP and the second non-folding support portion NFP2-MP of the support plate CPN may be spaced apart from each other with the folding support portion FP-MP interposed therebetween. The folding support portion FP-MP may be a portion corresponding to the folding area FA1 (see FIG. 3A), and the non-folding support portions NFP1-MP and NFP2-MP may be portions corresponding to the non-folding area NFA1 and NFA2 (see FIG. 3A). A plurality of openings OP and a plurality of concave grooves OPH may be defined in the support plate CPN. The openings OP may be defined to correspond to the folding area FA1. The openings OP may be referred to as slits. The concave grooves OPH may be provided in an area that is adjacent to the folding area FA1, and may have a concave shape that is recessed from a bottom surface of the support plate CPN toward an upper surface of the support plate CPN. In an embodiment of the present disclosure, the concave grooves OPH may be omitted.

The support plate CPN and the first film PF-M may be adhered to each other by an adhesive layer AL3. The adhesive layer AL3 may be separated into two parts, and the two parts may be spaced apart with a folding support portion FP-MP of the support plate CPN interposed therebetween.

An adhesive layer AL4 and a cover member TPU may be attached to a lower portion of the support plate CPN. The cover member TPU may cover the openings OP of the support plate CPN. Accordingly, foreign substances may be prevented from being introduced into the openings OP. The adhesive layer AL4 may be separated into two parts, and the two parts may be spaced apart with the cover member TPU interposed therebetween.

Digitizers DZ1 and DZ2 may be attached to two parts of the adhesive layer AL4 respectively. The digitizers DZ1 and DZ2 may include a plurality of loop coils that generate a magnetic field of a preset resonant frequency with an electronic pen (also referred to as a pen, stylus, input device, or passive pen). The digitizers DZ1 and DZ2 may also be referred to as an EMR sensing panel.

A magnetic field formed in the digitizers DZ1 and DZ2 is applied to an LC resonance circuit including an inductor (e.g., coil) and a capacitor of the pen. The coil generates a current by the received magnetic field and transfers the generated current to the capacitor. Accordingly, the capacitor charges the current input from the coil and discharges the charged current to the coil. As a result, a magnetic field of a resonant frequency is emitted from the coil. The magnetic field emitted by the pen may be reabsorbed by the loop coil of the digitizers DZ1 and DZ2, and accordingly, the electronic device ED may sense the coordinates of the pen.

The lower functional members CP1 and CP2 may be disposed under the digitizers DZ1 and DZ2 respectively. The lower functional members CP1 and CP2 may include polyethylene terephthalate and a copper layer. The lower functional members CP1 and CP2 may function as a heat dissipation member or as an electromagnetic shielding layer.

A lower spacer CSP may be disposed between the lower functional member CP2 and the second portion DP2 of the display panel DP. In an embodiment of the present disclosure, the lower spacer CSP may be omitted. The electronic device ED may further include a cover layer CVL. The cover layer CVL is attached to the second portion DP2 of the display panel DP, and may cover a driving chip, and the like. The lower spacer CSP and the cover layer CVL may serve to protect the second portion DP2 of the display panel DP.

The first portion DP1 of a display panel DP may include a first upper surface US and a plurality of first side surfaces SS1 that are connected to the first upper surface US. Referring to FIG. 7, two first side surfaces SS1 that extend along the first direction DR1 and one first side surface SS1 that extends along the second direction DR2 are illustrated.

The upper member UM may be disposed on the first upper surface US. The upper member UM may include a plurality of second side surfaces SS2. The upper member UM may have a structure, in which a plurality of components are laminated, and side surfaces of the plurality of components may or may not be aligned. Accordingly, each of the second side surfaces SS2 may include side surfaces of each of the plurality of components. Accordingly, the second side surfaces SS2 may be referred to as side portions or side groups.

A portion of the first portion DP1 of the display panel DP, which is connected to a bending portion DPB, has no side surface. That is, the bending portion DPB may be directly connected to the first portion DP1. Accordingly, a number of the first side surfaces SS1 may be less than a number of the second side surfaces SS2. Alternatively, when viewed in the third direction DR3, a total length of the first side surfaces SS1 may be less than a total length of the second side surfaces SS2. The second side surfaces SS2 may include (2-1)-th side surfaces SS2a and a (2-2)-th side surface SS2b. The (2-1)-th side surfaces SS2a may be aligned with (e.g., vertically aligned with) the first side surfaces SS1 of the first portion DP1 of the display panel DP. The (2-2)-th side surface SS2b may be adjacent to a boundary between the first portion DP1 and the bending portion DPB of the display panel DP. The (2-1)-th side surfaces SS2a may be referred to as second-first side surfaces SS2a, and the (2-2)-th side surface SS2b may be referred to as a second-second side surface SS2b.

The electronic device ED may further include an edge member EPM that covers the second side surfaces SS2 of the upper member UM. The edge member EPM may protect the window WD from an external impact.

The edge member EPM may further cover the first side surfaces SS1 of a first portion DP1 of the display panel DP and a portion USP of a first upper surface US, which is adjacent to the bending portion DPB. That is, in the absence of the edge member EPM, the portion USP may be exposed. In other words, the upper adhesive layer AL2 may be laterally spaced apart from an edge of the bending protecting member BPL, allowing the portion USP to be exposed and then covered by the edge member EPM, such that the edge member EPM may directly contact the upper surface of the portion USP. The edge member EPM may include a first edge portion EPM1 that contacts the first side surfaces SS1 and a second edge portion EPM2 that contacts the portion USP of the first upper surface US. The first edge portion EPM1 may extend in the first direction DR1 and a second direction DR2 intersecting the first direction DR1, and the second edge portion EPM2 may extend in the second direction DR2. The second edge portion EPM2 may cover a portion of the bending protecting member BPL. In this case, the bending portion DPB may be covered by the bending protecting member BPL and the edge member EPM. Accordingly, the bending portion DPB may be protected from external foreign substances. In an embodiment of the present disclosure, the second edge portion EPM2 may overlap the first portion DP1 and the bending portion DPB of the display panel DP.

The (2-1)-th side surfaces SS2a of the upper member UM may contact the first edge portion EPM1, and the (2-2)-th side surface SS2b of the upper member UM may contact the second edge portion EPM2. In an embodiment of the present disclosure, a shape of a first outer surface OS1 of the first edge portion EPM1 and a shape of a second outer surface OS2 of the second edge portion EPM2 may be different from each other. The first outer surface OS1 may have a convex shape that protrudes from each of the first side surfaces SS1 and the (2-1)-th side surfaces SS2a, and the second outer surface OS2 may have a shape that is inclined with respect to the (2-2)-th side surface SS2b (that is, the second outer surface OS2 may have a partially concave shape that is concave toward the (2-2)-th side surface SS2b).

In an embodiment of the present disclosure, the shape of the first outer surface OS1 may be convex shape protruding from a portion of side surfaces of the first portion DP1 of the display panel DP and a portion of side surfaces of the upper member UM (e.g., in the first direction DR1), and the shape of the second outer surface OS2 may be a shape inclined with respect to another portion of the side surfaces of the first portion DP1 of the display panel DP and another portion of the side surfaces of the upper member UM. For example, a most protruding portion of the first edge portion EPM1 may be defined in a central area of the first edge portion EPM1, and a most protruding portion of the second edge portion EPM2 may be defined in a lower area of the second edge portion EPM2 that is contacting the bending protecting member BPL.

Each of the edge member EPM and the reinforcing member BPM may include a resin. For example, the edge member EPM may include an allyl-based resin or an acrylic-based resin, and the reinforcing member BPM may include an acrylic-based resin. However, this is only an example, and embodiments are not limited thereto.

Each of the edge member EPM and the reinforcing member BPM may include a transparent resin or a resin having a specific color. The specific color may be black, but embodiments are not limited thereto. For example, when the resin has a specific color, it may have the effect of shielding light on the side surfaces of the display panel DP, and because it is easily visibly recognized during inspection during the process of manufacturing the electronic device ED, it may be easy to sense defects.

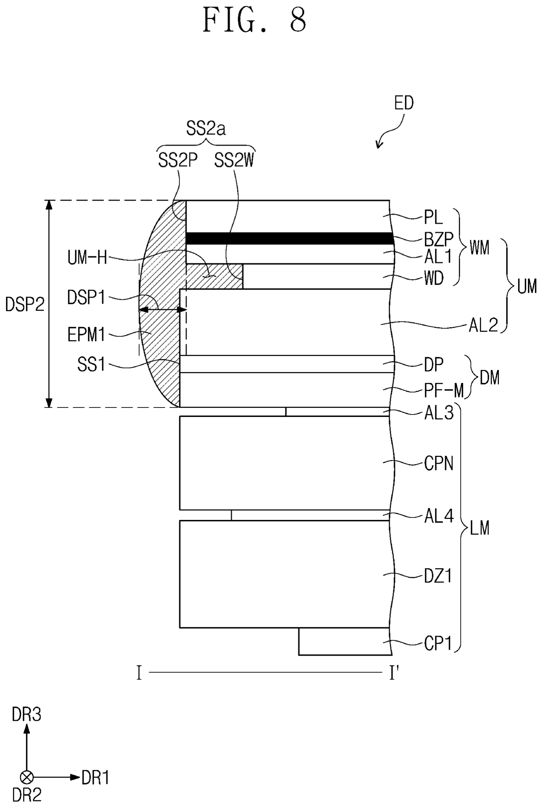

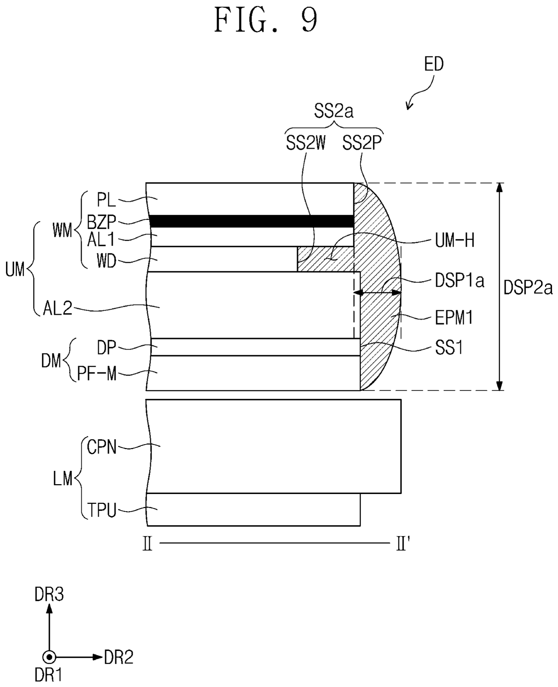

According to an embodiment of the present disclosure, the edge member EPM may be formed by using a high viscose resin. For example, the viscosity of the resin used to form the edge member EPM may be 2,000 cPs or more. For example, the viscosity may be 3,000 cPs to 6,500 cPs, but embodiments are not limited thereto. For example, the viscosity may be 10,000 cPs or 20,000 cPs. When the edge member EPM includes an allylic -based resin, the viscosity may be 3,500 cPs, and when the edge member EPM includes an acrylic-based resin, the viscosity may be 5,900 cPs. However, this is only an example and is not particularly limited thereto. As the viscosity of the resin constituting the edge member EPM increases, the coating thickness of the edge member EPM, for example, the first and second coating thicknesses DSP1 and DSP2 of FIGS. 8 and 9, may easily reach the target thickness.

According to an embodiment of the present disclosure, the viscosity of the reinforcing member BPM may be lower than the viscosity of the edge member EPM. For example, the viscosity of the reinforcing member BPM may be 1,000 cPs or less, for example, 400 cPs. However, embodiments are not limited thereto. For reference, the above-described viscosities may be material properties that are measured at 25 degrees Celsius before each of the edge member EPM and the reinforcing member BPM are cured.

The modulus (or Young's modulus) of the material that constitutes the edge member EPM and the reinforcing member BPM may be 0 MPa or more and 10 MPa or less at -20 degrees Celsius. When the above modulus condition is satisfied, flexibility may be sufficiently secured in various usage environments even when it is applied to the electronic device ED that is changed between folded and unfolded states. For example, the modulus of the edge member EPM at -20 degrees Celsius may be 0.32MPa, and the modulus of the reinforcing member BPM may be 2MPa. However, embodiments are not limited thereto.

In an embodiment of the present disclosure, the modulus of the edge member EPM may be smaller than the modulus of the reinforcing member BPM. For example, at 25 degrees Celsius, the modulus of the edge member EPM may be 0.09 MPa, and the modulus of the reinforcing member BPM may be 0.18 MPa. However, embodiments are not limited thereto.

The housing HAU may further include a hinge structure to facilitate folding or bending. The housing HAU receives the display module DM and the lower member LM, and may be coupled to the upper member UM.

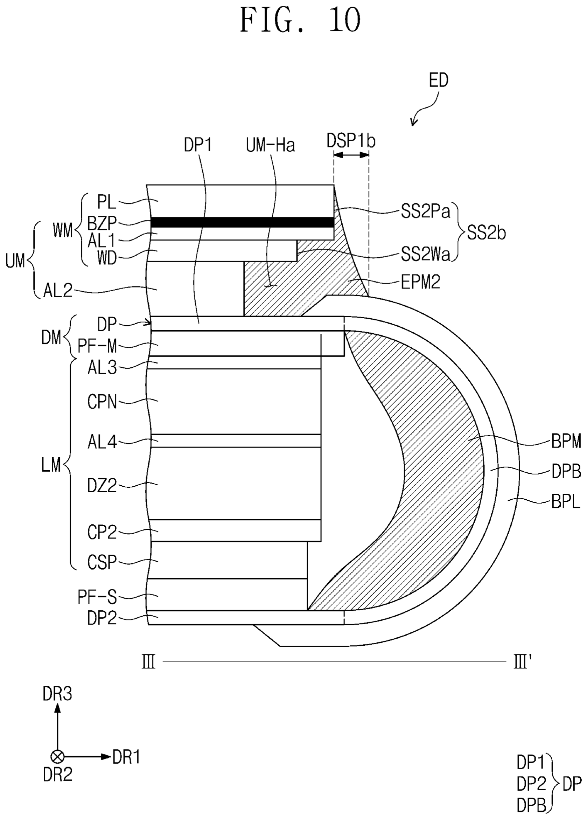

FIG. 8 is a cross-sectional view of a portion of an electronic device ED according to an embodiment of the present disclosure. For example, FIG. 8 is a cross-sectional view including a portion corresponding to line I-I' of FIG. 7. FIG. 9 is a cross-sectional view of a portion of an electronic device ED according to an embodiment of the present disclosure. For example, FIG. 9 is a cross-sectional view including a portion corresponding to line II-II' of FIG. 7. FIG. 10 is a cross-sectional view of a portion of an electronic device ED according to an embodiment of the present disclosure. For example, FIG. 10 is a cross-sectional view including a portion corresponding to line III-III' of FIG. 7.

Referring to FIG. 7, the first portion DP1 of the display panel DP may include a first area EP1, a second area EP2, and a third area EP3. The first area EP1 may be an area including side surfaces of the first and second non-folding areas NFP1-D and NFP2-D. The second area EP2 may be an area including side surfaces of the folding area FP-D. The third area EP3 may be an area that is adjacent to the bending portion DPB. FIG. 8 is a cross-sectional view of the first area EP1, FIG. 9 is a cross-sectional view of the second area EP2, and FIG. 10 is a cross-sectional view of the third area EP3.

Referring to FIGS. 6, 7, 8, 9, and 10, the edge member EPM may be provided in a form that surrounds the first area EP1, the second area EP2, and the third area EP3. In this case, because the shapes of the first area EP1, the second area EP2, and the third area EP3 are different, the shape of the edge member EPM may be provided differently depending on the area, in which it is disposed.

Referring to FIGS. 5, 8 and 9, among the second side surfaces SS2, the (2-1)-th side surfaces SS2a may include first side surface portions SS2P defined by the protective film PL and second side surface portions SS2W defined by the window WD. In an embodiment of the present disclosure, at least some of the first side surface portions SS2P may protrude more than the second side surface portions SS2W. That is, at least one second side surface portion SS2W (e.g., at least some of the second side surface portions SS2W) may protrude (e.g., laterally protrude) less than the first side surface portions SS2P (e.g., at least one first side surface portion SS2P), so that a concave groove UM-H may be defined in the (2-1)-th side surfaces SS2a. In this case, the first edge portion EPM1 may be filled in the concave groove UM-H. As used herein, "protrude more/protrude less" may indicate a width difference between entire components. For example, the second side surface portions SS2W defined by the window WD may protrude less than the first side surface portions SS2P defined by the protective film PL because the protective film PL is wider than the window WD in cross-sectional view.

Referring to FIGS. 5 and 10, among the second side surfaces SS2, the (2-2)-th side surfaces SS2b may include first side surface portions SS2Pa defined by the protective film PL and second side surface portions SS2Wa defined by the window WD. In an embodiment of the present disclosure, the first side surface portion SS2Pa may protrude more than the second side surface portion SS2Wa. That is, the second side surface portion SS2Wa protrudes less than the first side surface portion SS2Pa. Furthermore, a side surface of the upper adhesive layer AL2 protrudes less than the second side surface portion SS2Wa. Accordingly, a concave groove UM-Ha may be defined in the (2-2)-th side surface SS2b. In this case, the second edge portion EPM2 may be filled in the concave groove UM-Ha.

Referring to FIGS. 8, 9, and 10, the structures of the areas, in which the first edge portion EPM1 and the second edge portion EPM2 are formed, are different each other. Accordingly, the designs for forming the first edge portion EPM1 and the second edge portion EPM2 may be different each other. For example, the coating thicknesses, the coating widths, and the like of the resins for forming the first edge portion EPM1 and the second edge portion EPM2 may be different each other.

In an embodiment of the present disclosure, the first coating thickness DSP1 of the resin in the first area EP1 and the second coating thickness DSP1a of the resin in the second area EP2 may be designed to be 50 micrometers or more and 150 micrometers or less, for example, 100 micrometers. However, the numerical values for the first and second coating thicknesses DSP1 and DSP1a are only examples, and embodiments are not limited thereto. Each of the first and second coating thicknesses DSP1 and DSP1a may indicate a degree of protrusion from the first side surface portions SS2P defined by the protective film PL.

In an embodiment of the present disclosure, a first coating width DSP2 of the resin in the first area EP1 and a second coating width DSP2a of the resin in the second area EP2 may be designed to be 278 micrometers or more and 378 micrometers or less, for example, 328 micrometers. However, the numerical values for the first and second coating widths DSP2 and DSP2a are only examples, and the present disclosure is not particularly limited thereto. For example, the first and second coating widths DSP2 and DSP2a may be designed such that the first edge portion EPM1 in the second area EP2 does not contact the support plate CPN.

In an embodiment of the present disclosure, the protrusion width DSP1b of the resin in the third area EP3 may indicate a degree of protrusion from the first side surface portion SS2Pa defined by the protective film PL. The protrusion width DSP1b may be designed to be 50 micrometers or more and 250 micrometers or less, for example, 150 micrometers. Furthermore, the resin may be applied so that the second edge portion EPM2 may cover the protective film PL to the bending portion DPB without a break. Accordingly, the bending portion DPB may be additionally protected by not only the bending protecting member BPL but also the second edge portion EPM2.

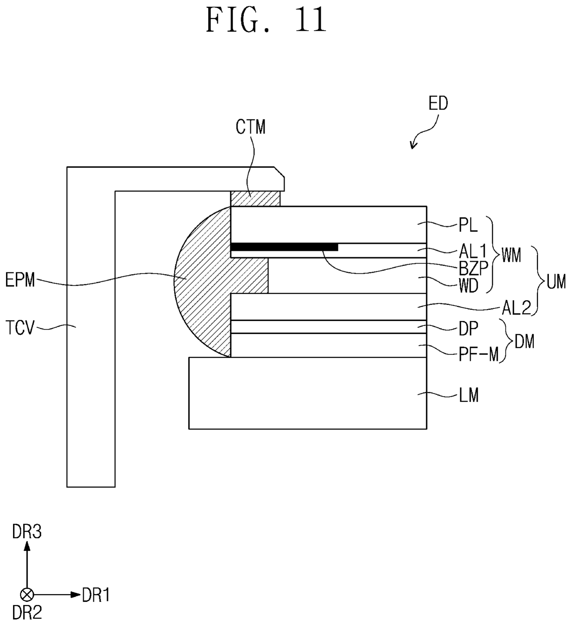

FIG. 11 is a cross-sectional view of an electronic device ED according to an embodiment of the present disclosure.

Referring to FIG. 11, the electronic device ED may include a display module DM, a lower member LM, an upper member UM, and a cover housing TCV. In FIG. 11, the lower member LM is illustrated in a simplified form, and may include components as described above in FIG. 6, but embodiments are not limited thereto.

The cover housing TCV may be coupled to the housing HAU illustrated in FIG. 5, or may be a portion of the housing HAU illustrated in FIG. 5. The cover housing TCV may have a form that covers a portion of an upper surface of the upper member UM. For example, a coupling member CTM may be disposed between the cover housing TCV and the protective film PL. The coupling member CTM may be a double-sided tape or a pressure sensitive adhesive PSA, but embodiments are not limited thereto. In an embodiment of the present disclosure, the coupling member CTM may be omitted.

According to an embodiment of the present disclosure, the edge member EPM may cover side surfaces of an upper member UM and side surfaces of a display module DM. Accordingly, a window WD included in the upper member UM may be protected from external impact. Furthermore, side surfaces of a display panel DP may be protected from external foreign substances.

Furthermore, because the edge member EPM covers the side surfaces of the upper member UM and the display module DM, the width of the space considering the slip phenomenon between the components of the upper member UM and the display module DM may be reduced when the electronic device ED is transformed to be folded. Accordingly, an extent occupied by the peripheral area F-NAA (see FIG. 3A) on the front side of the electronic device ED may be reduced. A width of the bezel of the electronic device ED may be reduced.

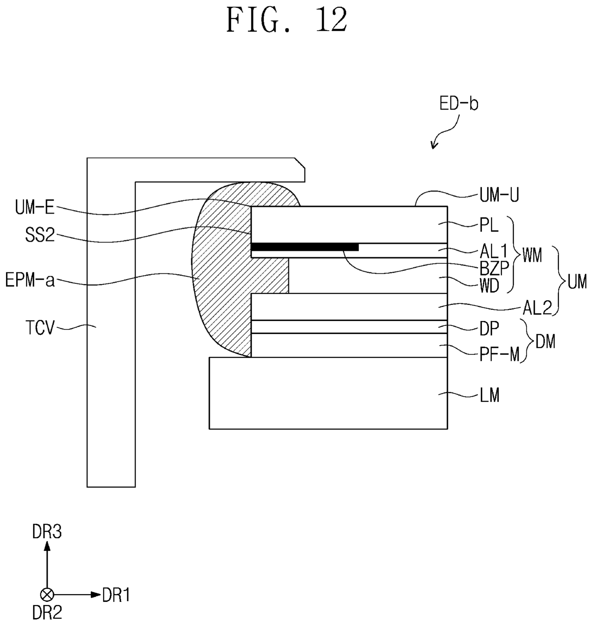

FIG. 12 is a cross-sectional view of an electronic device ED-b according to an embodiment of the present disclosure.

Referring to FIG. 12, the upper member UM may further include a second upper surface UM-U that is connected to the second side surfaces SS2. In an embodiment of the present disclosure, the edge member EPM-a may further cover a portion of the second upper surface UM-U. For example, the second upper surface UM-U may correspond to an upper surface of the protective film PL. The edge member EPM-a may protrude more than the upper surface of the protective film PL.

In an embodiment of the present disclosure, the cover housing TCV may contact the edge member EPM-a. For example, the cover housing TCV may be coupled to the edge member EPM-a. In this case, a component for coupling the cover housing TCV and the upper member UM may be omitted.

Furthermore, because the edge member EPM-a covers the second side surfaces SS2 and the second upper surface UM-U of the upper member UM, the corners UM-E of the upper member UM may be covered. Accordingly, the upper member UM may be further protected from external impact by the edge member EPM-a.

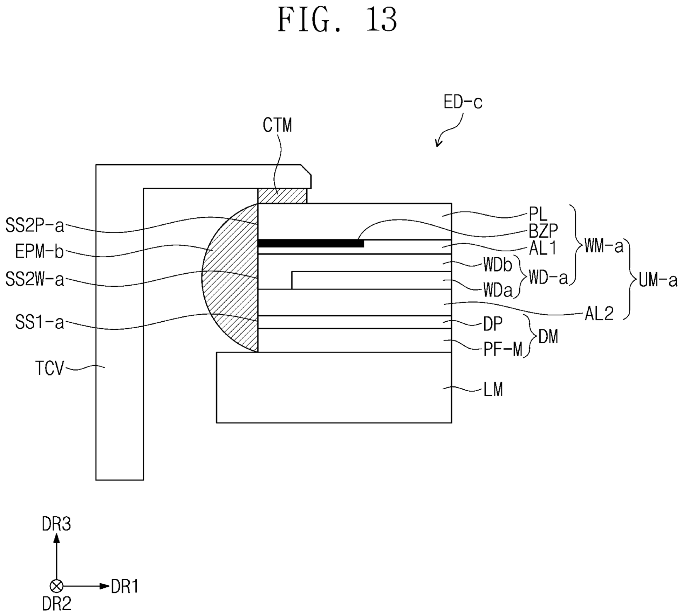

FIG. 13 is a cross-sectional view of an electronic device ED-c according to an embodiment of the present disclosure.

Referring to FIG. 13, the electronic device ED-c may include an upper member UM-a, a display module DM, and a lower member LM. The upper member UM-a may include a window member WM-a and an upper adhesive layer AL2. The window member WM-a may include a window WD-a.

In an embodiment of the present disclosure, the window WD-a may be a coated window. For example, the window WD-a may include a substrate layer WDa and a coating layer WDb. The substrate layer WDa may be a glass substrate. The coating layer WDb may be coated on an upper surface and side surfaces of the substrate layer WDa.

In an embodiment of the present disclosure, a side surface (or a first side surface portion) SS2P-a of the protective film PL and a side surface (or a second side surface portion) SS2W-a of the window WD-a may be aligned (e.g., vertically aligned) with each other. The edge member EPM-b may cover the side surfaces SS2P-a and SS2W-a of the protective film PL and the window WD-a and a side surfaces SS1-a of the display module DM.

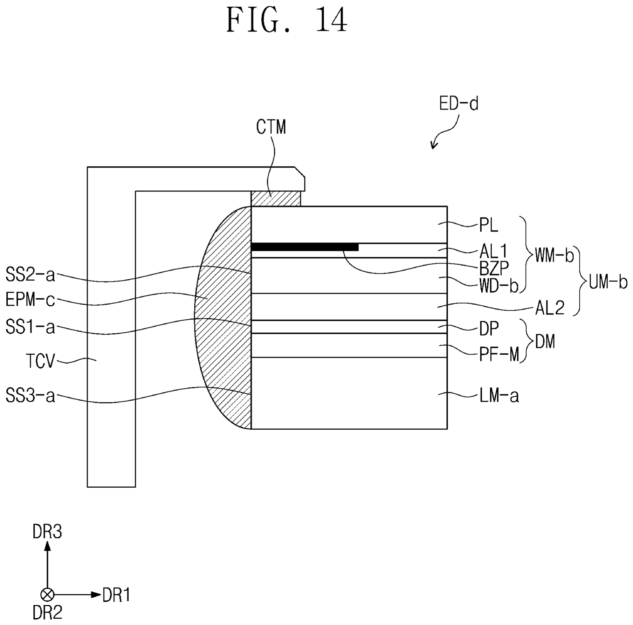

FIG. 14 is a cross-sectional view of an electronic device ED-d according to an embodiment of the present disclosure.

Referring to FIG. 14, the electronic device ED-d may include an upper member UM-b, a display module DM, and a lower member LM-a. The upper member UM-b may include a window member WM-b and an upper adhesive layer AL2. The window member WM-b may include a window WD-b. In an embodiment of the present disclosure, a side surface SS2-a of the upper member UM-b, a side surface SS1-a of the display module DM, and a side surface SS3-a of the lower member LM-a may be aligned with each other. The edge member EPM-c may cover all of the side surface SS2-a of the upper member UM-b, the side surface SS1-a of the display module DM, and the side surface SS3-a of the lower member LM-a. The edge member EPM-c may contact the side surface (or side walls) SS3-a of the lower member LM-a.

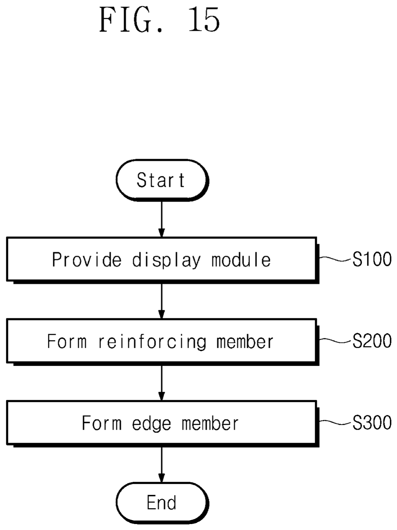

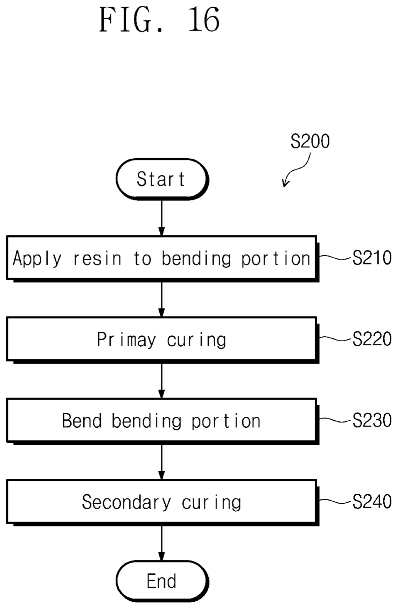

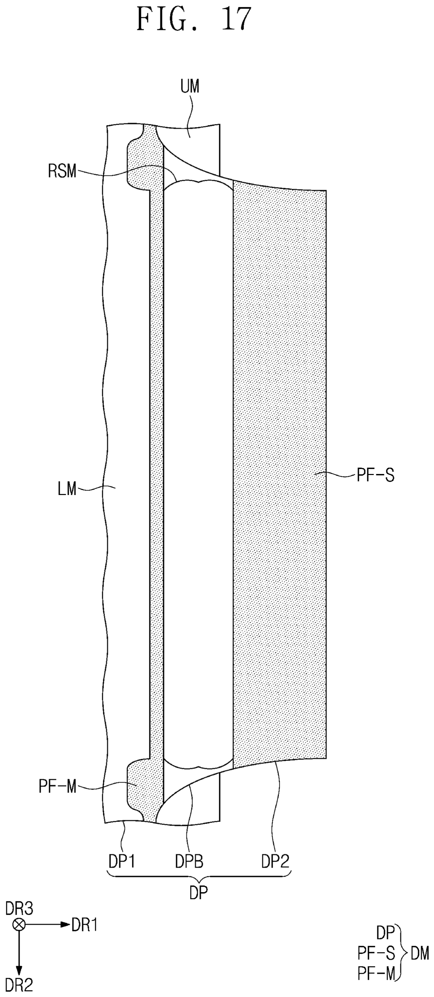

FIG. 15 is a flowchart of a method for manufacturing an electronic device according to an embodiment of the present disclosure. FIG. 16 is a flowchart of a method for manufacturing an electronic device according to an embodiment of the present disclosure. FIG. 17 is a diagram illustrating one operation of a method for manufacturing an electronic device according to an embodiment of the present disclosure.

Referring to FIG. 15, a method for manufacturing an electronic device may include providing a display module in operation S100, forming a reinforcing member in operation S200, and forming an edge member in operation S300. Referring to FIG. 16, operation S200 may include an operation of applying a resin to a bending portion (S210), a primary curing operation (S220), a bending portion bending operation (S230), and a secondary curing operation (S240).

Referring to FIGS. 15, 16, and 17, a display module DM is provided. The display module DM may include a display panel DP, a first film PF-M, and a second film PF-S. The display panel DP includes a first portion DP1, a bending portion DPB, and a second portion DP2, and may be provided in a state before the bending portion DPB is bent. FIG. 17 illustrates a portion of a rear surface of the display panel DP that is not bent.

A reinforcing member BPM (see FIG. 6) may be formed in an area that overlaps the bending portion DPB exposed between the first film PF-M and the second film PF-S on the rear surface of the display panel DP. For example, a resin RSM is applied to the bending portion DPB (e.g., operation S210). Thereafter, the resin RSM may be primarily cured (e.g., operation S220). The primary curing may be referred to as a preliminary curing operation. For example, in the primary curing operation, ultraviolet rays may be irradiated to primarily cure the resin RSM.

After the resin RSM is primarily cured, the bending portion DPB may be bent. The bending portion DPB may be bent so that the resin RSM is disposed in an inner area surrounded by the first portion DP1, the bending portion DPB, and the second portion DP2.

After the bending portion DPB is bent, the resin RSM may be secondarily cured to form a reinforcing member BPM. For example, the primarily cured resin may be irradiated with ultraviolet rays or heat to form a reinforcing member BPM.

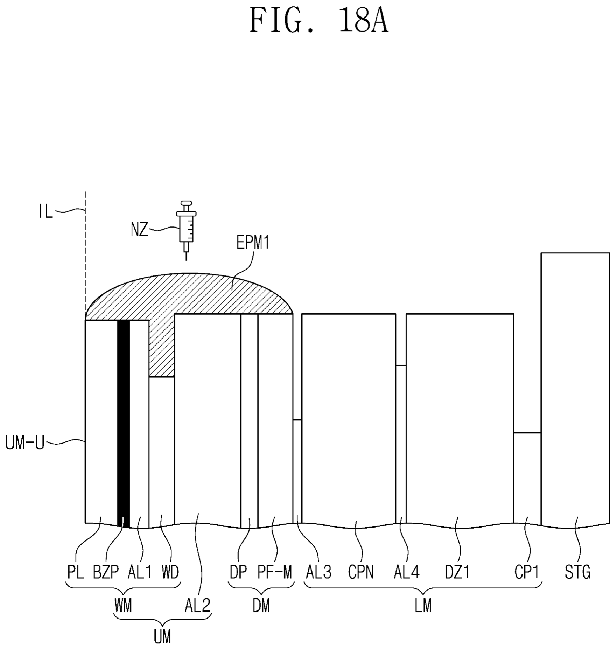

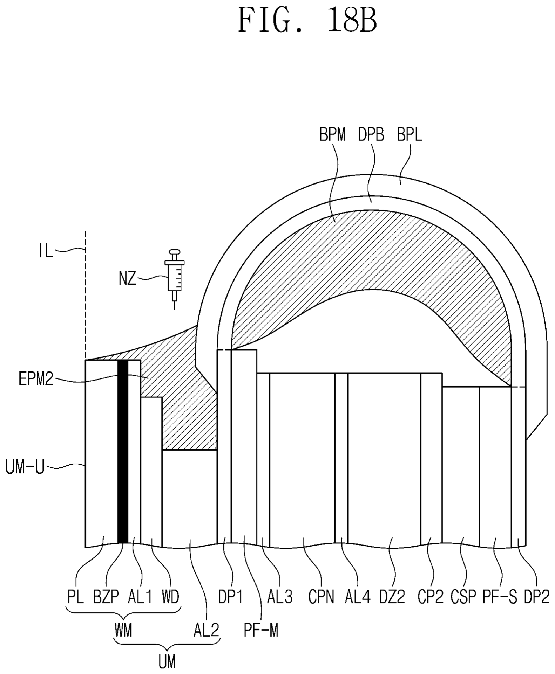

FIGS. 18A and 18B are views illustrating one operation of a method for manufacturing an electronic device according to an embodiment of the present disclosure.

Referring to FIGS. 18A and 18B, a resin may be vertically applied to form an edge member EPM (see FIG. 6). The resin may be dispensed by a jetting method or an electrohydrodynamic (EHD) method.

A stage STG may be attached to the lower member LM or the upper member UM. In FIG. 18A, the stage STG is illustrated to be attached to the lower member LM by way of example. For vertical application, the stage STG may be rotated.

When the application width (e.g., the coating thicknesses DSP2 or DSP2a (see FIG. 8 or FIG. 9)) of the resin is determined, the position of a nozzle NZ is aligned, and then the resin may be applied to the upper member UM and the display module DM. For example, the nozzle NZ may be located at a point that is spaced apart by half of the application width from a reference line IL that is parallel to the upper surface UM-U of the upper member UM.

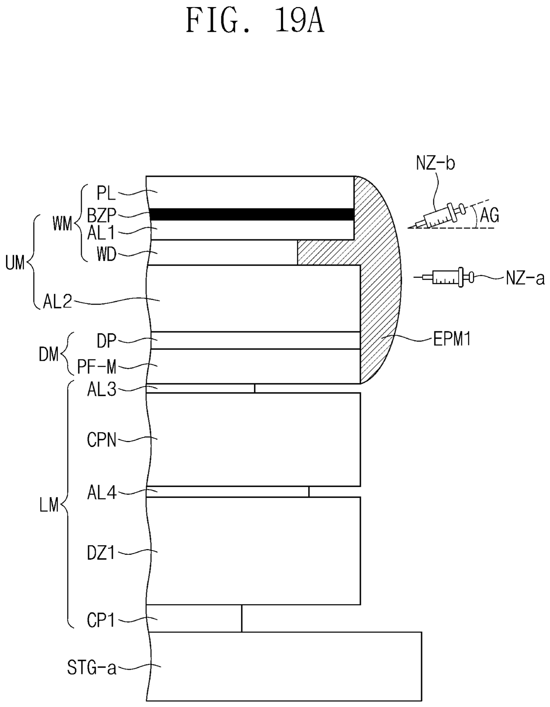

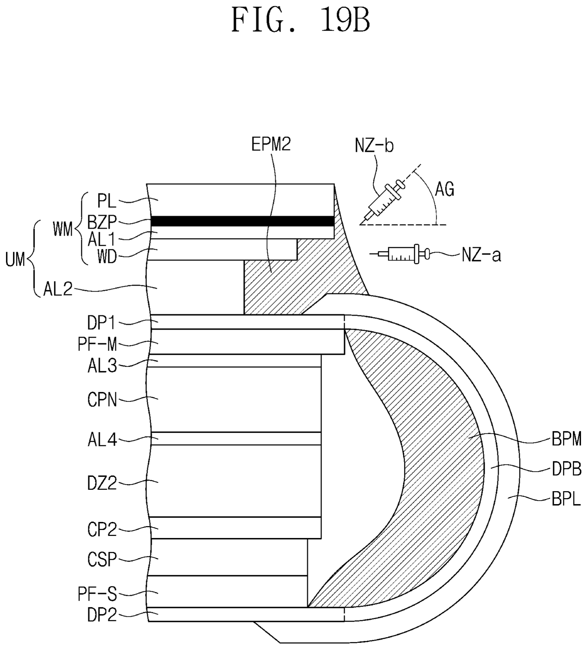

FIGS. 19A and 19B are views illustrating one operation of a method for manufacturing an electronic device according to an embodiment of the present disclosure.

Referring to FIGS. 19A and 19B, a resin may be horizontally applied to form an edge member EPM (see FIG. 6). The resin may be dispensed by a jetting method or an electrohydrodynamic (EHD) method.

The lower member LM may be attached to the stage STG-a. In the case of horizontal application, a nozzle NZ-a for applying the resin may be rotated, or the stage STG-a may be rotated. The nozzle NZ-a may be aligned parallel to the horizontal direction to apply the resin. Alternatively, the nozzle NZ-b may be aligned to be inclined at a specific angle AG with respect to the horizontal direction to apply the resin. The specific angle AG may be 0 degrees or more and less than 90 degrees, and may be, for example, 20 degrees, 40 degrees, or 60 degrees.

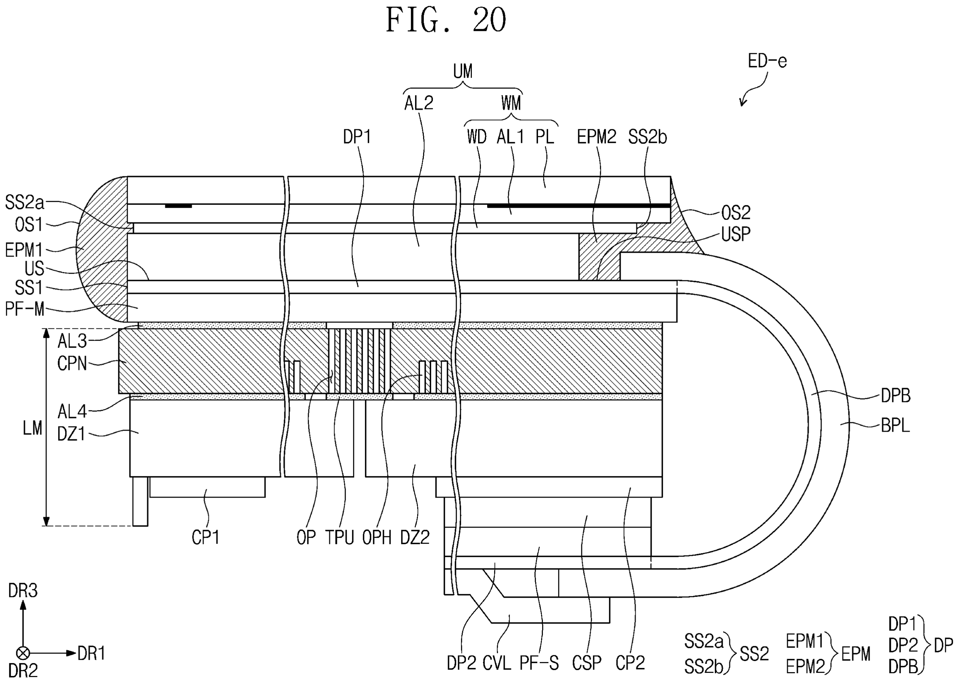

FIG. 20 is a cross-sectional view of a portion of an electronic device ED-e according to an embodiment of the present disclosure. In a description of FIG. 20, differences from the contents described in FIG. 6 will be described.

Referring to FIG. 20, the reinforcing member BPM may be omitted in the electronic device ED-e, compared to the electronic device ED illustrated in FIG. 6. In the display panel DP, the rear surface (or lower surface) of the bending portion DPB may face the lower member LM.

The electronic device ED-e may further include an edge member EPM that covers the second side surfaces SS2 of the upper member UM. The edge member EPM may protect the window WD from external impact, and may protect side surfaces of the display panel DP from external foreign substances. The edge member EPM may further cover the first side surfaces SS1 of a first portion DP1 of the display panel DP and a portion USP of a first upper surface US, which is adjacent to the bending portion DPB. Furthermore, the upper surface of the bending portion DPB may be protected by the bending protecting member BPL and the second edge portion EPM2.

According to the above, the electronic device may include the display panel, the upper member disposed on the display panel, a lower member disposed under the display panel, and an edge member that covers side surfaces of the upper member and the display panel. The window of the upper member may be protected from external impact by the edge member, and side surfaces of the display panel may be protected from external foreign substances by the edge member. In addition, the electronic device may further include the reinforcing member disposed in at least a portion of a space defined between the bending portion of the display panel and the lower member. Because the bending portion of the display panel is supported by the reinforcing member, the strength and durability of the bending portion may be improved. As a result, the durability and reliability of the electronic device may be improved.

Each of the embodiments provided in the above description is not excluded from being associated with one or more features of another example or another embodiment also provided herein or not provided herein but consistent with the disclosure.

## Claims

1. An electronic device (10, ED) comprising:
a display panel (DP) comprising a first portion (DP1) comprising a first upper surface (US) and a plurality of first side surfaces (SS1) connected to the first upper surface (US), a bending portion (DBP), and a second portion (DP2);
an upper member (UM) on the first upper surface (US) and comprising a plurality of second side surfaces (SS2);
a lower member (LM) under the first portion (DP1) of the display panel (DP); and
an edge member (EPM) covering the plurality of second side surfaces (SS2) of the upper member (UM), the plurality of first side surfaces (SS1), and a portion (USP) of the first upper surface (US) that is adjacent to the bending portion (DBP).

2. The electronic device (10, ED) of claim 1, wherein the edge member (EPM) comprises a first edge portion (EPM1) contacting the plurality of first side surfaces (SS1) and a second edge portion (EPM2) contacting the portion (USP) of the first upper surface (US), and
wherein a shape of a first outer surface (OS1) of the first edge portion (EPM1) is different from a shape of a second outer surface (OS2) of the second edge portion (EPM2).

3. The electronic device (10, ED) of claim 2, wherein the plurality of second side surfaces (SS2) comprise a plurality of (2-1)-th side surfaces (SS2a) contacting the first edge portion (EPM1) and a (2-2)-th side surface (SS2b) contacting the second edge portion (EPM2).

4. The electronic device (10, ED) of claim 3, wherein the shape of the first outer surface (OS1) is convex protruding from the plurality of first side surfaces (SS1) and the plurality of (2-1)-th side surfaces (SS2a), and
wherein the shape of the second outer surface (OS2) is inclined with respect to the (2-2)-th side surface (SS2b).

5. The electronic device (10, ED) of any one of claims 2 to 4, further comprising:
a bending protecting member (BPL) on the bending portion (DBP) of the display panel (DP),
wherein the second edge portion (EPM2) covers a portion of the bending protecting member (BPL).

6. The electronic device (10, ED) of any one of claims 1 to 5, further comprising:
a reinforcing member (BPM) facing the bending portion (DBP) of the display panel (DP).

7. The electronic device (10, ED) of claim 6, further comprising:
a first film (PF-M) between the display panel (DP) and the lower member (LM), and under the first portion (DP1) of the display panel (DP); and
a second film (PF-S) under the second portion (DP2) of the display panel (DP),
wherein at least a portion of the bending portion (DBP) between the first film (PF-M) and the second film (PF-S) contacts the reinforcing member (BPM).

8. The electronic device (10, ED) of any one of claims 1 to 7, wherein the upper member (UM) further comprises a second upper surface (UM-U) connected to the plurality of second side surfaces (SS2), and
wherein the edge member (EPM) covers a portion of the second upper surface (UM-U).

9. The electronic device (10, ED) of any one of claims 1 to 8, wherein the upper member (UM) comprises a protective film (PL), and a window (WD) between the protective film (PL) and the first portion (DP1) of the display panel (DP), and
wherein each of the plurality of second side surfaces (SS2a) comprises a first side surface portion (SS2Pa) defined by the protective film (PL) and a second side surface portion (SS2Wa) defined by the window (WD).

10. The electronic device (10, ED) of claim 9, wherein, for each of the plurality of second side surfaces (SS2), the first side surface portion (SS2Pa) is vertically aligned with the second side surface portion (SS2Wa).

11. The electronic device (10, ED) of claim 9 or 10, wherein, among the plurality of second side surfaces (SS2), at least one second side surface portion (SS2Wa) laterally protrudes less than at least one first side surface portion (SS2Pa) such that a concave groove (UM-Ha) is defined in the respective second side surface (SS2), and the edge member (EPM) is in the concave groove (UM-Ha).

12. The electronic device (10, ED) of any one of claims 1 to 11, wherein the edge member (EPM) contacts side walls of the lower member (LM).

13. The electronic device (10, ED) of any one of claims 1 to 12, wherein the first portion (DP1) of the display panel (DP) is adjacent to the bending portion (DBP) in a first direction (DR1), and the bending portion (DBP) is bent with respect to an axis extending in a second direction (DR2) intersecting the first direction (DR1), and
wherein the first portion (DP1) of the display panel (DP1) comprises a first non-folding area (NFP1-D), a folding area (FP-D), and a second non-folding area (NFP2-D) sequentially defined along the first direction (DR1).

14. The electronic device (10, ED) of any one of claims 1 to 13, further comprising:
a processor (12) configured to control an operation of the display panel (DP);
a memory (13) configured to store data information for an operation of the processor (12) or the display panel; and
a power module (14) configured to supply electric power for operations of the display panel (DP) and the processor (12).
